# EUROPEAN PATENT SPECIFICATION

(11) **EP 0 961 515 B1**
(45) Date of publication and mention of the grant of the patent: **03.07.2002**
(21) Application number: 98401298.9
(22) Date of filing: 29.05.1998
(51) Int. Cl.: H04Q 11/04

(54) **Data modulation method, and related modulator and demodulator devices**
Datenmodulationsverfahren und dazugehörige Modulation- und Demodulationseinrichtungen
Méthode de modulation de données et dispositifs de modulation et démodulation correspondants

(43) Date of publication of application: 01.12.1999
(73) Proprietor: ALCATEL, 75008 Paris (FR)
(72) Inventor: Peeters, Miguel, 1200 Brussels (BE); Reusens, Peter Paul Frans, 9270 Laarne (BE)
(74) Representative: Narmon, Gisèle Marie Thérèse

(56) References cited:
- EP-A- 0 808 074
- WO-A-96/42160
- US-A- 5 541 964

## Description

The present invention relates to a modulation method as defined in the non-characteristic part of claim 1, to a modulator device as defined in the non-characteristic part of claim 7, and to a demodulator device as defined in the non-characteristic part of claim 9.

Such modulation methods and devices to perform respectively the modulation and demodulation are already known in the art, e.g. from *the Nortel standard contribution entitled 'On the ATM TC for VDSL' from the author L.D. Humphrey, and in US Patent 5,541,964 entitled 'Distortion Compensation Technique'. In the just mentioned standard contribution, which is referred to by 'TD44 Antwerp' and which was presented on the meeting of 20-24'th April 1998 in Antwerp of ETSI's Sub-Technical Committee TM6*, a VDSL (Very High Bit Rate Digital Subscriber Line) modem is described which transfers ATM (Asynchronous Transfer Mode) cells over a VDSL (Very High Speed Digital Subscriber Line) network segment. If idle or unused ATM cells are supplied to the modem, the modem replaces these idle ATM cells with null ATM cells, i.e. cells whose header and payload sections are completely filled with zero bytes. The modem further associates with the null data symbols comprising the null ATM cells the origin point of a constellation diagram used to modulate the carrier(s). In this way, transmitted power is minimised during transfer of idle ATM cells and FEXT (Far End Crosstalk) is reduced significantly. If however a sequence of idle ATM cells is transferred as a sequence of origin points of a constellation diagram, detection at the demodulator becomes difficult because of the powerless property of the origin point of the constellation diagram. In the known method, eight subsequent carriers are summed to perform the detection. Moreover, equaliser training and tracking at the demodulator is hampered if a sequence of powerless data symbols arrives there, as a consequence of which the known modulation technique is not suitable for use in modems equipped with an adaptive equaliser whose taps are adjusted on the basis of information in the received data symbols, such as a DMT (Discrete Multi Tone) modem used in an ADSL (Asymmetric Digital Subscriber Line) environment. The powerless data symbols from the method disclosed in 'TD44 Antwerp' can be avoided according to US 5,541,964 by mapping the idle mode data symbols onto the innermost constellation point of the constellation diagram. This innermost constellation point is a lowest power constellation point different from the zero power point. In that way, detection at the demodulator is simplified. Thus, by associating a lowest power constellation point with idle cells, the transmitted power is minimised during idle data transmission, similar to the method known from US 5,541,964, so that no zero power points are transmitted and so that it is no longer necessary to sum eight successive carriers to enable detection. Nevertheless, equaliser tracking and training at the demodulator remains problematic, in particular in case a long sequence of one and the same lowest power constellation point is transferred. This is so because such an unvarying sequence contains no information at all. Moreover, the method known from US 5,541,964 may result in a high crest factor in multi-carrier systems because all idle data symbols are represented by in-phase carriers.

It is an object of the present invention to provide a modulation method, and related modulator and demodulator devices of the above known type, but wherein transfer of idle data symbols does not have disadvantageous effects on equaliser training and tracking.

According to the invention, this object is realised by the modulation method defined in claim 1, the modulator device defined in claim 7 and the demodulator device defined in claim 9.

Indeed, by randomly transforming constellation points into constellation points of equal power, equaliser training and tracking is simplified whilst not increasing the transmitted power. Moreover, it is avoided that all idle data symbols are represented by in-phase carriers which would otherwise result in a high crest factor in multi-carrier systems.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

An additional feature of the present invention is defined in claim 2.

Thus, a first embodiment of the invention is realised by enabling a modulator to inverse randomly the real and imaginary parts of constellation points associated with data symbols. The constellation points then are mirrored vis-à-vis the origin point of the constellation scheme which does not change their power.

Another additional feature of the present invention is defined in claim 3.

Thus, a second embodiment of the invention is realised by enabling a modulator to inverse randomly the real or imaginary parts of constellation points associated with data symbols. The constellation points then are mirrored vis-à-vis the horizontal or vertical axis of the constellation scheme which does not change their power.

Yet another additional feature of the present invention is defined in claim 4.

Thus, a third embodiment of the present invention is realised by enabling a modulator to randomly change the phase of constellation points. Such a phase rotation also does not change the power of the constellation points. In particular, the phase may be randomly changed over integer multiples of 90 degrees as defined in claim 5.

A further feature of the modulation method according to the present invention is defined in claim 6.

Indeed, the present invention is very suitable for transport of ATM (Asynchronous Transfer Mode) cells over an ADSL (Asymmetric Digital Subscriber Line) or VDSL (Very High Bit Rate Digital Subscriber Line) network segment because power consumption is critical therein and most of the time an ATM link is expected to transport idle ATM cells. Moreover, an ADSL or VDSL DMT receiver includes an equaliser that has to be trained and, in case of a multi-carrier ADSL/VDSL system, clipping due to a high crest factor may occur. The present invention adds to solve all of these problems.

As is indicated in claims 8 and 10, scrambling and descrambling idle data symbols can be deactivated.

The above mentioned and other objects and features of the invention will become more apparent and the invention itself will be best understood by referring to the following description of an embodiment taken in conjunction with the accompanying drawings wherein:
Fig. 1 represents a block scheme of embodiments of a modulator device MOD and demodulator device DMOD according to the present invention;
Fig. 2 represents a constellation diagram of a square modulator wherein the present invention is applied; and
Fig. 3 represents a constellation diagram of a linear modulator wherein the present invention is applied.

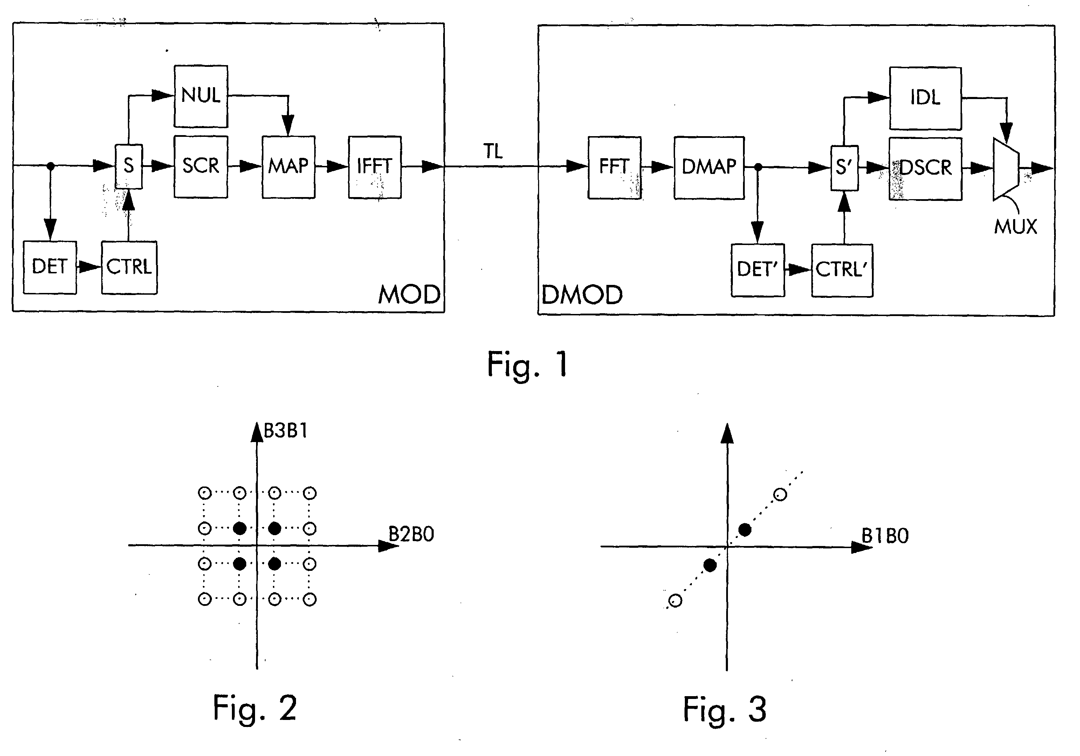

In Fig. 1 a modulator MOD is coupled via a telephone line TL to a demodulator DMOD. The telephone line TL may support one-way communication, i.e. data traffic from the modulator MOD to the demodulator DMOD, or it may be a bi-directional link allowing communication in both directions. In the latter situation, the modulator MOD and demodulator DMOD form part of two communicating modems which each include the functionality of both the modulator MOD and the demodulator DMOD. This is for instance so in a VDSL (Very High Speed Digital Subscriber Line) system.

The modulator MOD includes a switch S, a null cell generator NUL, a scrambler SCR, a mapper MAP, an inverse fast fourier transformer IFFT, an idle cell detector DET and a control unit CTRL. The switch S, the scrambler SCR, the mapper MAP and the inverse fast fourier transformer IFFT are cascade connected between an input and output of the modulator MOD. The null cell generator NUL, coupled between an output of the switch S and input of the mapper MAP, constitutes a bypass for the scrambler SCR. The input of the modulator MOD is interconnected with an input of the idle cell detector DET and the idle cell detector DET further has an output coupled to an input of the control unit CTRL. The control unit CTRL has an output connected to a control input of the switch S.

The demodulator DMOD includes a fast fourier transformer FFT, a demapper DMAP, a switch S', a descrambler DSCR, an idle cell generator IDL, a multiplexer MUX, a null data detector DET' and a control unit CTRL'. The fast fourier transformer FFT, the demapper DMAP, the witch S', the descrambler DSCR and the multiplexer MUX are cascade connected between an input and output of the demodulator DMOD. The idle cell generator IDL, coupled between a second output of the switch S' and second input of the multiplexer MUX, constitutes a bypass for the descrambler DSCR. The null data detector DET' has an input interconnected with an output of the demapper DMAP and an output connected to an input of the control unit CTRL'. The control unit CTRL' is provided with an output connected to a control input of the switch S'.

In the following paragraphs, the working of the modulator MOD and demodulator DMOD of Fig. 1 will be described in case non-idle data are to be transferred there between and in case idle data are to be transferred there between. It is assumed that the modulator MOD is a DMT (Discrete Multi Tone) modulator, that the demodulator DMOD is a DMT demodulator, and that both are used in a VDSL (Very High Speed Digital Subscriber Line) system. The system drawn in Fig. 1 in other words is a multi-carrier system wherein different amounts of bits are modulated on different carriers in accordance with different constellation schemes. The amount of bits modulated on each carrier may for instance depend on the noise measured on the telephone line TL at the frequency of that carrier. In fact however, it is not important in view of the present invention how the amount of bits modulated on a carrier is determined.

At the input of the modulator MOD, ATM (Asynchronous Transfer Mode) cells arrive that have to be transferred over the VDSL (Very High Speed Digital Subscriber Line) network segment between the modulator MOD and demodulator DMOD. If non-idle ATM cells arrive at the entrance of the modulator MOD, the scrambler SCR adds a random sequence of bits to the bits of these non-idle ATM cells to obtain a good statistic of the transmitted signal. The so scrambled bits are then applied to the mapper MAP which allocates to each carrier of a DMT (Discrete Multi Tone) symbol a data symbol comprising the amount of bits that has to be modulated on this carrier in accordance with a bit allocation algorithm. In addition, the phase and amplitude of the carriers are modulated by the mapper MAP in accordance with an appropriate constellation scheme. The mapper MAP thereto associates with each data symbol a constellation point of the constellation scheme and then transforms this constellation point into another constellation point having the same power. A carrier whereon four bits, B0, B1, B2 and B3, are to be modulated, is for instance modulated in accordance with the constellation scheme drawn in Fig. 2. Instead of the constellation point associated with a data symbol by the scheme of Fig. 2, the carrier is modulated with a constellation point obtained by randomly rotating the former point over an integer multiple of 90 degrees. A carrier whereon only two bits, B0 and B1, have to be modulated, is modulated in accordance with the constellation scheme of Fig. 3. Instead of the constellation point associated with a data symbol by the scheme in Fig. 3, the carrier is modulated with a constellation point obtained by randomly mirroring the former point vis-à-vis the origin point in Fig. 3. Once the phases and amplitudes of the carriers are modulated, the set of carriers constituting one DMT (Discrete Multi Tone) symbol is transformed from frequency domain to time domain by the inverse fast fourier transformer IFFT. The time domain DMT (Discrete Multi Tone) symbol is transferred over the telephone line TL to the demodulator DMOD wherein the fast fourier transformer FFT transforms the time domain DMT (Discrete Multi Tone) symbol again into a frequency domain DMT (Discrete Multi Tone) symbol. The demapper DMAP uses the same constellation schemes as the mapper MAP in the modulator MOD and de-randomises the assignment of constellation points to subtract from each carrier the amount of bits modulated thereon and the descrambler DSCR subtracts the random sequence of bits added by the scrambler SCR so that at the output of the demodulator DMOD, an exact copy of the ATM cells which were applied to the input of the modulator MOD appears.

In case idle ATM cells are applied to the input of the modulator MOD, the idle cell detector DET recognises these idle ATM cells and deactivates the scrambler SCR via the control unit CTRL and switch S. The idle ATM cells in other words bypass the scrambler SCR via the null cell generator NUL which converts each idle ATM cell into a null cell, i.e. cells whose header and payload section is completely filled with zero bits. These zero bits are then applied to the mapper MAP to be modulated on the different carriers in accordance with the respective constellation schemes. If for instance a sequence of zero bits has to be modulated on a carrier with constellation scheme drawn in Fig. 2, the lowest power constellation point in the first quadrant of the constellation scheme should be transmitted until non-idle cells arrive at the modulator MOD. Since this may cause difficulties for equaliser training, the sequence of zero bits is converted by the mapper MAP into a random sequence of low power constellation points in the 4 quadrants of the constellation scheme. More particularly, the mapper MAP generates a random sequence of the four black filled constellation points in Fig. 2. The mapper MAP in other words again randomly rotates the constellation points associated with the data symbols over an integer multiple of 90 degrees. The average power to be transferred compared to a modem which encodes all null data symbols into the low power constellation point of the first quadrant is not increased. The inverse fast fourier transformer IFFT again transforms the modulated carriers constituting one DMT (Discrete Multi Tone) symbol into a time domain DMT (Discrete Multi Tone) symbol that is transferred over the telephone line TL towards the demodulator DMOD. In the demodulator DMOD, the fast fourier transformer FFT regenerates the frequency domain DMT (Discrete Multi Tone) symbols from the time domain DMT (Discrete Multi Tone) symbols. The demapper DMAP de-randomises the low power constellation points and subtracts from each carrier the amount of zero bits modulated thereon. The null data detector DET' recognises these zero bits and controls the switch S' via the control unit CTRL' so that the null bits are applied to the idle cell generator IDL which changes null ATM cells for idle ATM cells. The controller CTRL' thereto controls switch S' so that the descrambler DSCR is bypassed. The multiplexer MUX multiplexes idle and non-idle data into a single outgoing information stream.

In case of square modulation, the phase of this carrier is randomised as indicated by the four low power constellation points in the different quadrants of the constellation scheme in Fig. 2. In case of linear modulation (amplitude modulation without phase modulation) on the other hand, null data cells are converted into a random sequence of two inverse constellation points, as is illustrated by Fig. 3.

A first remark is that, although the multi-carrier signal in the above described embodiment is transported over a telephone line TL, the applicability of the present invention is not restricted by the transmission medium via which the signal is transported. In particular, transmission over any kind of connection between the modulator MOD and demodulator DMOD, e.g. a cable connection, a satellite connection, a radio link through the air, and so on, may be improved according to the present invention.

The invention also is not only related to ADSL (Asymmetric Digital Subscriber Line) or similar systems wherein DMT (Discrete Multi Tone) modulation is used. A person skilled in the art will be able to adapt the above described embodiment so that it is applicable in any other system wherein a single-carrier signal or multi-carrier signal is transmitted from a transmitting modem to a receiving modem.

Yet another remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention.

## Claims

1. Modulation method for modulating a sequence of data symbols on at least one carrier in accordance with at least one constellation diagram whereby idle data symbols in said sequence are replaced by null data symbols before said at least one carrier is modulated, and a lowest power constellation point which is not the zero power point is associated with said null data symbols,
**CHARACTERISED IN THAT** constellation points associated with said data symbols are randomly transformed into constellation points of equal power.

2. Modulation method according to claim 1,
**CHARACTERISED IN THAT** real and imaginary parts of said constellation points are randomly inverted whereby said constellation points are transformed into constellation points of equal power.

3. Modulation method according to claim 1,
**CHARACTERISED IN THAT** real or imaginary parts of said constellation points are randomly inverted whereby said constellation points are transformed into constellation points of equal power.

4. Modulation method according to claim 1,
**CHARACTERISED IN THAT** said constellation points are rotated in phase to be transformed into constellation points of equal power.

5. Modulation method according to claim 4,
**CHARACTERISED IN THAT** said phase is rotated over an integer multiple of 90 degrees.

6. Modulation method according to any of claims 1 to 5,
**CHARACTERISED IN THAT** said sequence of data symbols comprises an Asynchronous Transfer Mode (ATM) cell sequence, said idle data symbols comprise idle Asynchronous Transfer Mode (ATM) cells and said at least one carrier is modulated in accordance with a Digital Subscriber Line (DSL) physical layer protocol.

7. Modulator device (MOD) for modulating a sequence of data symbols on at least one carrier in accordance with at least one constellation diagram, said modulator device (MOD) including means (NUL) for replacing said idle data symbols in said sequence by null data symbols, and means (MAP) to associate a lowest power constellation point which is not the zero power point with said null data symbols,
**CHARACTERISED IN THAT** said means (MAP) to associate a lowest power constellation point with said null data symbols are further adapted to randomly transform constellation points associated with said data symbols into constellation points of equal power of said at least one constellation diagram for modulation of said at least one carrier.

8. Modulator device (MOD) according to claim 7,
**CHARACTERISED IN THAT** said modulator device (MOD) further comprises detection means (DET) to detect said idle data symbols and scrambling means (SCR) for scrambling said data symbols, said scrambling means (SCR) being adapted to be deactivated if said detection means (DET) detects said idle data symbols.

9. Demodulator device (DMOD) for demodulating a sequence of data symbols from at least one carrier in accordance with at least one constellation diagram, said demodulator device (DMOD) including means (IDL) to replace null data symbols demodulated from said at least one carrier by idle data symbols, and said demodulator device (DMOD) being adapted to cooperate with a modulator device (MOD) able to modulate said sequence of data symbols on said at least one carrier in accordance with said at least one constellation diagram, able to replace said idle data symbols in said sequence by null data symbols, and able to associate a lowest power constellation point which is not the zero power point with said null data symbols,
**CHARACTERISED IN THAT** said modulator device (MOD) is further able to randomly transform constellation points associated with said data symbols into constellation points of equal power of said at least one constellation diagram for modulation of said at least one carrier, and said demodulator device (DMOD) further comprises means to de-randomise constellation points associated with said data symbols and to associate with a lowest power constellation point said null data symbols.

10. Demodulator device (DMOD) according to claim 9,
**CHARACTERISED IN THAT** said demodulator device (DMOD) further comprises detection means (DET') to detect said null data symbols and descrambling means (DSCR) for descrambling said data symbols, said descrambling means (DSCR) being adapted to be deactivated if said detection means (DET') detects said null data symbols.

## Patentansprüche

1. Modulationsverfahren zum Modulieren einer Folge von Datensymbolen auf mindestens einem Träger in Übereinstimmung mit mindestens einem Konstellationsdiagramm, wodurch leere Datensymbole in der Folge durch Null-Datensymbole ersetzt werden, bevor der mindestens eine Träger moduliert wird, und ein Konstellationspunkt niedrigster Leistung, der nicht der Null-Leistungspunkt ist, ist den Null-Datensymbolen zugeordnet, **dadurch gekennzeichnet, daß** den Datensymbolen zugeordnete Konstellationspunkte zufallsmäßig in Konstellationspunkte gleicher Leistung transformiert werden.

2. Modulationsverfahren gemäß Anspruch 1, **dadurch gekennzeichnet, daß** reale und imaginäre Teile der Konstellationspunkte zufallsmäßig invertiert werden, wodurch die Konstellationspunkte in Konstellationspunkte gleicher Leistung transformiert werden.

3. Modulationsverfahren gemäß Anspruch 1, **dadurch gekennzeichnet, daß** reale oder imaginäre Teile der Konstellationspunkte zufallsmäßig invertiert werden, wodurch die Konstellationspunkte in Konstellationspunkte gleicher Leistung transformiert werden.

4. Modulationsverfahren gemäß Anspruch 1, **dadurch gekennzeichnet, daß** die Konstellationspunkte gleichphasig gedreht werden, um in Konstellationspunkte gleicher Leistung transformiert zu werden.

5. Modulationsverfahren gemäß Anspruch 4, **dadurch gekennzeichnet, daß** die Phase um ein ganzzahliges Vielfaches von 90° gedreht wird.

6. Modulationsverfahren gemäß einem der Ansprüche 1 bis 5, **dadurch gekennzeichnet, daß** die Folge von Datensymbolen eine ATM-Zellenfolge (Asynchronous Transfer Mode cell sequence) umfaßt, wobei die leeren Datensymbole leere ATM-Zellen (Asynchronous Transfer Mode cells) umfassen, und daß der mindestens eine Träger in Übereinstimmung mit dem physikalischen Schichtenprotokoll einer DSL (Digital Subscriber Line) moduliert ist.

7. Modulatorvorrichtung (MOD) zum Modulieren einer Folge von Datensymbolen auf mindestens einem Träger in Übereinstimmung mit mindestens einem Konstellationsdiagramm, wobei die Modulatorvorrichtung (MOD) Mittel (NUL) zum Ersetzen der leeren Datensymbole in der Folge durch Null-Datensymbole und Mittel (MAP), um einen Konstellationspunkt niedrigster Leistung, der nicht der Null-Leistungspunkt ist, den Null-Datensymbolen zuzuordnen, umfaßt, **dadurch gekennzeichnet, daß** die Mittel (MAP), um einen Konstellationspunkt niedrigster Leistung den Null-Datensymbolen zuzuordnen, ferner angepaßt sind, um den Datensymbolen zugeordnete Konstellationspunkte in Konstellationspunkte gleicher Leistung des mindestens einen Konstellationsdiagramm für die Modulation des mindestens einen Trägers zu transformieren.

8. Modulatorvorrichtung (MOD) gemäß Anspruch 7, **dadurch gekennzeichnet, daß** die Modulatorvorrichtung (MOD) ferner Erfassungsmittel (DET), um die leeren Datensymbole zu erfassen, und Verwürfelungsmittel (SCR) zum Verwürfeln der Datensymbole umfaßt, wobei die Verwürfelungsmittel (SCR) angepaßt sind, um deaktiviert zu werden, wenn das Erfassungsmittel (DET) die leeren Datensymbole erfaßt.

9. Demodulatorvorrichtung (DMOD) zum Demodulieren einer Folge von Datensymbolen von mindestens einem Träger in Übereinstimmung mit mindestens einem Konstellationsdiagramm, wobei die Demodulatorvorrichtung (DMOD) Mittel (IDL) umfaßt, um von dem mindestens einen Träger demodulierte Null-Datensymbole mit leeren Datensymbolen zu ersetzen, und die Demodulatorvorrichtung (DMOD) angepaßt ist, um mit der Modulatorvorrichtung (MOD) zusammenzuarbeiten, die im Stande ist, die Folge von Datensymbolen auf dem mindestens einen Träger in Übereinstimmung mit dem mindestens einen Konstellationsdiagramm zu modulieren, die im Stande ist, die leeren Datensymbole in der Folge mit Null-Datensymbolen zu ersetzen, und die im Stande ist, einen Konstellationspunkt niedrigster Leistung, der nicht der Null-Leistungspunkt ist, den Null-Datensymbolen zuzuordnen, **dadurch gekennzeichnet, daß** die Modulatorvorrichtung (MOD) ferner im Stande ist, den Datensymbolen zugeordnete Konstellationspunkte zufallsmäßig in Konstellationspunkte gleicher Leistung des mindestens einen Konstellationsdiagramms zur Modulieren des mindestens einen Trägers zu transformieren, und die Demodulatorvorrichtung (DMOD) ferner Mittel zum Entwürfeln der den Datensymbolen zugeordneten Konstellationspunkte und zum Zuordnen der Null-Datensymbole zu einem Konstellationspunkt niedrigster Leistung umfaßt.

10. Demodulatorvorrichtung (DMOD) gemäß Anspruch 9, **dadurch gekennzeichnet, daß** die Demodulatorvorrichtung (DMOD) ferner Erfassungsmittel (DET'), um die Null-Datensymbole zu erfassen, und Entwürfelungsmittel (DSCR) zum Entwürfeln der Datensymbole umfaßt, wobei die Entwürfelungsmittel (DSCR) angepaßt sind, um deaktiviert zu werden, wenn das Erfassungsmittel (DET') die Null-Datensymbole erfaßt.

## Revendications

1. Procédé de modulation pour moduler une séquence de symboles de données sur au moins une porteuse selon au moins un plan de constellation de sorte que des symboles de données vides dans ladite séquence sont remplacés par des symboles de données nulles avant que au moins une dite porteuse soit modulée, et un point de constellation de la plus faible puissance qui n'est pas le point de puissance nulle, est associé auxdits symboles de données,
**caractérisé en ce que** des points de constellation associés auxdits symboles de données sont transformés de façon aléatoire en points de constellation de puissance égale.

2. Procédé de modulation selon la revendication 1,
**caractérisé en ce que** des parties réelles et imaginaires desdits points de constellation sont inversés de façon aléatoire pour que lesdits points de constellation soient transformés en points de constellation de puissance égale.

3. Procédé de modulation selon la revendication 1,
**caractérisé en ce que** des parties réelles ou imaginaires dans lesdits points de constellation sont inversés de façon aléatoire pour que lesdits points de constellation soient transformés en points de constellation de puissance égale.

4. Procédé de modulation selon la revendication 1,
**caractérisé en ce que** lesdits points de constellation sont tournés en phase pour être transformés en points de constellation de puissance égale.

5. Procédé de modulation selon la revendication 4,
**caractérisé en ce que** ladite phase est tournée sur un multiple entier de 90 degrés.

6. Procédé de modulation selon Tune quelconque des revendications 1 à 5,
**caractérisé en ce que** ladite séquence de symboles de données comprend une séquence de cellules de mode de transfert asynchrone (ATM) lesdits symboles de données vides comprennent des cellules des modes de transfert asynchrone vide (ATM) et au moins une dite porteuse est modulée selon le protocole de couche physique de ligne d'abonnés numérique (DSL).

7. Dispositif modulateur (MOD) pour moduler une séquence de symboles de données sur au moins une porteuse selon au moins un plan de constellation, ledit dispositif modulateur (MOD) comprenant un moyen (NUL) pour remplacer lesdits symboles de données vides dans ladite séquence par des symboles de données nulles, un moyen (MAP) pour associer un point de constellation de la plus faible puissance qui n'est pas le point de puissance de zéro avec lesdits symboles de données nulles,
**caractérisé en ce que** ledit moyen (MAP) pour associer un point de constellation de la plus faible puissance avec lesdits symboles de données nulles sont en outre adaptés pour transformer aléatoirement des points de constellation associés auxdits symboles de données en points de constellation de puissance égale au moins un dit plan de constellation pour une modulation d'au moins une dite porteuse.

8. Dispositif modulateur (MOD) selon la revendication 7,
**caractérisé en ce que** ledit dispositif modulateur (MOD) comprenant en outre un moyen de détection (DET) pour détecter lesdits symboles de données vides et un moyen de brouillage (SCR) pour brouiller lesdits symboles de données, ledit moyen de brouillage (SCR) étant adapté pour être désactivé si ledit moyen de détection (DET) détecte lesdits symboles de données vides.

9. Dispositif démodulateur (DMOD) pour démoduler une séquence de symboles de données à partir d'au moins une porteuse selon au moins un plan de constellation, ledit dispositif démodulateur (DMOD) comprenant un moyen (IDL) pour remplacer des symboles de données nulles démodulés à partir d'au moins une dite porteuse par des symboles de données vides, et ledit dispositif démodulateur (DMOD) étant adapté pour coopérer avec un dispositif modulateur (MOD) capable de moduler ladite séquence de symboles de données sur au moins une dite porteuse selon au moins un dit plan de constellation, capable de remplacer lesdits symboles de données vides dans ladite séquence par des symboles de données nulles, et capable d'associer un point de constellation de la plus faible puissance qui n'est pas le point de puissance nulle avec lesdits symboles de données nulles,
**caractérisé en ce que** ledit dispositif modulateur (MOD) est en outre capable de transformer aléatoirement des points de constellation associés auxdits symboles de données en points de constellation de puissance égale au moins un dit plan de constellation pour une modulation d'au moins une dite porteuse, et ledit dispositif démodulateur (DMOD) comprend en outre un moyen pour rendre non aléatoire des points de constellation associés auxdits symboles de données et pour associer avec un point de constellation de la plus faible puissance lesdits symboles de données.

10. Dispositif démodulateur (DMOD) selon la revendication 9,
**caractérisé en ce que** ledit dispositif démodulateur (DMOD) comprend en outre un moyen de détection (DET') pour détecter lesdits symboles de données nulles et un moyen de désembrouillage (DSCR) pour désembrouiller lesdits symboles de données, le moyen de désembrouillage (DSC) étant adapté pour être désactivé si ledit moyen de détection (DET') détecte lesdits symboles de données nulles.
